Europäisches Patentamt

European Patent Office

Office européen des brevets

(19)

(11) **EP 1 323 555 A1**

(12) **DEMANDE DE BREVET EUROPEEN**

(43) Date de publication:
**02.07.2003 Bulletin 2003/27**

(51) Int Cl.⁷: **B60H 1/00**

(21) Numéro de dépôt: **02293195.0**

(22) Date de dépôt: **20.12.2002**

(84) Etats contractants désignés:
**AT BE BG CH CY CZ DE DK EE ES FI FR GB GR IE IT LI LU MC NL PT SE SI SK TR**
Etats d'extension désignés:
**AL LT LV MK RO**

(30) Priorité: **27.12.2001 FR 0116903**
**27.12.2001 FR 0116904**

(71) Demandeur: **Renault s.a.s.**
**92100 Boulogne Billancourt (FR)**

(72) Inventeurs:
- **Braunschweig, Vincent**
  **92260 Fontenay Aux Roses (FR)**
- **Daniel, Yves**
  **92500 Rueil Malmaison (FR)**
- **L'Huillier, Jean-Marie**
  **92130 Issy Les Moulineaux (FR)**
- **Dimambro, Frédéric**
  **78400 Chatou (FR)**
- **Gaulme, Hervé**
  **92800 Puteaux (FR)**

(54) **Dispositif et procédé de climatisation de l'habitacle d'un véhicule automobile**

(57) Dispositif de climatisation comprenant une entrée d'air (6), un ensemble de traitement de chauffage/refroidissement (10, 11, 12) de l'air admis comprenant une chambre de mélange (12), au moins des première et seconde conduites de sortie (19, 23) de l'air traité débouchant dans la chambre de mélange (12), des moyens d'obturation d'entrée des conduites de sortie (21, 25) et un premier moyen de circulation d'air (9), caractérisé par le fait qu'il comprend une conduite arrière (38) alimentée en air à partir d'une prise d'air prises d'air (35) disposées sur au moins une conduites de sortie (27). Dans un procédé de climatisation de l'habitacle d'un véhicule automobile avec un tel dispositif, après traitement, une partie de l'air admis est dirigée vers l'avant et une autre partie de l'air admis est dirigée vers l'arrière, on augmente le débit d'air dirigé vers l'arrière pour effectuer la climatisation de la partie arrière du véhicule, et on corrige le débit d'air dirigé vers l'avant en fonction de l'augmentation de débit d'air vers l'arrière.

## FIG.1

EP 1 323 555 A1

**Description**

La présente invention concerne un dispositif et un procédé de climatisation d'un véhicule automobile, notamment un dispositif et un procédé de climatisation permettant une diffusion d'air vers un espace arrière.

Un dispositif de climatisation comprend généralement une admission d'air, un refroidisseur d'air, un radiateur de chauffage d'air, et des moyens de mélange d'air refroidi et d'air chauffé. Le dispositif de climatisation comprend une conduite de sortie vers des aérateurs de dégivrage, une conduite de sortie d'air vers des aérateurs de places avant, et une conduite de sortie vers des aérateurs de pieds. Les entrées des conduites de sortie peuvent être fermées complètement ou partiellement à l'aide de moyens d'obturation. Un panneau de réglage permet de commander une température d'air diffusé, un débit d'air selon plusieurs valeurs prédéterminées, et une répartition de l'air entre les différents aérateurs, par fermeture complète ou partielle de chaque conduite de sortie. Le dispositif de climatisation peut éventuellement être à commande automatique réalisée par une unité de commande et des capteurs associés.

On peut souhaiter proposer des véhicules automobiles comprenant des dispositifs de climatisation offrant la possibilité de réglages différents entre les places avant et les places arrière. Un véhicule peut comprendre deux dispositifs de climatisation : un dispositif avant et un dispositif arrière. Une telle solution est coûteuse. Par ailleurs, la consommation du véhicule est augmentée, et la maintenance des dispositifs de climatisation peut nécessiter des arrêts plus fréquents du véhicule.

Afin d'amener de l'air traité directement vers un espace arrière du véhicule, un dispositif de climatisation peut comprendre une sortie d'air arrière reliée à une canalisation débouchant dans ledit espace arrière. On connaît, par le document EP 0 989 004, un module d'air conditionné comprenant une chambre de mélange, d'où partent des conduites de dégivrage, des conduites d'aérateur avant, et des conduites d'aérateurs arrières.

Des parois de séparation permettent d'obtenir des chambres de mélange d'air différentes, et une diffusion d'air vers les différentes conduites avec des températures différentes. Des volets d'obturation des différentes conduites permettent, par fermeture complète ou partielle des entrées des conduites, et à partir d'un débit fourni par une alimentation d'air, une répartition d'air entre les conduites de dégivrage, d'aérateurs avant et d'aérateurs arrière. Cependant, un tel dispositif ne permet pas la diffusion d'air vers des places arrière d'un véhicule automobile par une adaptation simple d'un dispositif de diffusion d'air aux places avant, avec un réglage et une commande indépendants de débit arrière.

La présente invention concerne un dispositif de climatisation permettant une diffusion d'air avant et une diffusion d'air arrière, par une adaptation simple d'un dispositif à diffusion d'air à l'avant.

L'invention concerne également un dispositif de climatisation permettant d'obtenir une diffusion d'air arrière à réglage de débit indépendant, sans perturber un réglage de répartition et de débit d'air spécifié en sortie d'aérateurs avant.

La présente invention concerne aussi un procédé de climatisation permettant une diffusion d'air avant et une diffusion d'air arrière, avec un réglage indépendant des débits avant et arrière.

L'invention concerne encore un dispositif de climatisation permettant une diffusion d'air arrière, à partir d'une adaptation simple d'un dispositif de climatisation à diffusion d'air avant, et quelle que soit la répartition de diffusion d'air entre différents aérateurs avant du dispositif de climatisation.

L'invention concerne également un procédé de climatisation permettant d'obtenir une diffusion d'air arrière à réglage de débit indépendant, sans perturber un réglage de répartition et de débit d'air en sortie d'aérateurs avant.

L'invention concerne encore un procédé de climatisation permettant une diffusion d'air arrière, quelle que soit une répartition de diffusion d'air entre différents aérateurs avant.

Un tel dispositif de climatisation comprend une entrée d'air, un ensemble de traitement de chauffage/refroidissement de l'air admis, au moins des première et seconde conduites de sortie de l'air traité, des moyens d'obturation d'entrée des conduites de sortie et un premier moyen de circulation d'air. Le dispositif comprend en outre une conduite arrière de diffusion d'air vers un espace arrière alimentée en air à partir d'une prise d'air sur au moins une conduite de sortie.

L'alimentation en air de la conduite arrière à partir d'une prise d'air sur une conduite de sortie permet, à partir d'un dispositif de climatisation existant et diffusant de l'air aux places avant, de pouvoir diffuser de façon simple de l'air vers les places arrière. On prévoit des prises d'air judicieusement disposées sur les conduites de sortie du dispositif de climatisation, afin que la conduite arrière puisse, au moins dans tous les cas nécessaires, être alimentée en air.

Dans un mode de réalisation, le dispositif de climatisation comprend un moyen de circulation d'air disposé dans une portion intermédiaire de la conduite arrière. Le second moyen de circulation d'air disposé dans la conduite arrière permet une augmentation du débit d'air diffusé vers l'arrière, et peut par exemple être commandé à partir d'un panneau de commande accessible à partir des places arrière. Une commande appropriée des premier et second moyens de circulation, ainsi que des moyens d'obturation, peut permettre un réglage de débit arrière indépendant d'un réglage de diffusion d'air avant.

Avantageusement, la conduite arrière comprend à une extrémité opposée aux prises d'air au moins deux sorties arrières, permettant une diffusion d'air vers des portions différentes de l'espace arrière. Par exemple, une sortie d'air peut diffuser de l'air vers les pieds des passagers arrière, une seconde sortie d'air diffusant de l'air vers le haut du corps des passagers. Une sortie d'air peut alimentée une pluralité d'aérateurs, proches ou distants.

De préférence, le dispositif de climatisation comprend un moyen de répartition d'air entre les sorties arrières, et un moyen de commande associé. Le moyen de commande peut être commandé à partir d'un panneau de réglage accessible aux passagers arrière, afin qu'il puissent régler la répartition d'air arrière à leur convenance.

Dans un mode de réalisation, le dispositif de climatisation comprend au moins une troisième conduite de sortie d'air, la conduite arrière étant alimentée en air par des prises d'air disposées sur au moins deux conduites de sortie. L'alimentation en air de la conduite arrière à partir d'une pluralité de prises d'air, disposées sur différentes conduites de sortie, permet d'assurer l'alimentation en air de la conduite arrière dans la plupart des configurations de répartition d'air entre les conduites de sortie. Ainsi, un réglage de débit arrière indépendant est rendu possible, puisque l'on ne risque pas de priver la conduite arrière d'alimentation en air.

Dans un mode de réalisation, chaque entrée de conduite de sortie d'air est associée à un moyen d'obturation, pour permettre un réglage de répartition d'air entre les conduites de sortie. Bien entendu, des moyens d'obturation peuvent être reliées pour permettre certaines configurations de répartition d'air.

Dans un mode de réalisation, le dispositif de climatisation comprend une unité de commande apte à commander les moyens d'obturation des conduites de sortie et le premier moyen de circulation d'air en fonction d'informations de débits souhaités en sortie des conduites de sortie.

Dans un mode de réalisation préféré, l'unité de commande comprend des moyens de détermination d'une information de débit dans la conduite arrière, et des moyens de détermination de débits corrigés d'entrée des conduites de sortie pour la commande du premier moyen de circulation d'air et des moyens d'obturation des conduites de sortie.

Dans le procédé selon l'invention de climatisation de l'habitacle d'un véhicule automobile, après traitement, une partie de l'air admis est dirigée vers l'avant et une autre partie de l'air admis est dirigée vers l'arrière, on augmente le débit d'air dirigé vers l'arrière pour effectuer la climatisation de la partie arrière du véhicule, et on corrige le débit d'air dirigé vers l'avant en fonction de l'augmentation de débit d'air vers l'arrière.

L'air admis est réparti pour être diffusé vers l'arrière et vers l'avant du véhicule. L'alimentation en débit d'air dirigé vers l'arrière perturbe la diffusion d'air vers l'avant. Notamment, le débit d'air dirigé vers l'avant peut se trouver diminué, l'augmentation du débit d'air dirigé vers l'arrière provoquant une variation de débit dans des conduites de sortie de diffusion d'air vers l'avant.

Dans un mode de mise en oeuvre, on augmente le débit d'air dirigé vers l'arrière à l'aide d'un moyen de circulation d'air disposé dans une conduite arrière, destinée à l'alimentation en air d'au moins une sortie arrière. Le moyen de circulation est du type ventilateur à actionneur rotatif.

Dans un mode de mise en oeuvre, on alimente une conduite arrière de diffusion d'air vers l'arrière du véhicule à partir d'au moins une prise d'air sur une conduite de sortie de diffusion d'air vers l'avant du véhicule. L'augmentation d'un débit dans la conduite arrière provoquera une diminution sensiblement proportionnelle du débit en sortie d'une conduite de sortie sur laquelle est disposée une prise d'air, et également en sortie d'une conduite de sortie dépourvue de prise d'air, mais avec un coefficient de proportionnalité moins important. La correction de débit d'air dirigé vers l'avant doit permettre de compenser une variation de débit de sortie dans différentes conduites de sortie.

Dans un mode de mise en oeuvre, on détermine des débits souhaités en sortie de conduites de sortie de diffusion d'air vers l'avant, on corrige les débits souhaités en fonction d'une augmentation de débit d'air vers l'arrière. La diffusion d'air vers l'avant se fait généralement par l'intermédiaire d'une pluralité de conduites de sortie de diffusion d'air vers l'avant. Des débits souhaités en sortie des conduites de sortie sont déterminés afin de commander une répartition du débit d'air dirigé vers l'avant entre les différentes conduites de sortie. La variation de débit en sortie des différentes conduites de sortie, provoquée par une augmentation du débit d'air dirigé vers l'arrière, est différente en sortie de chacune des conduites de sortie. Par exemple, une prise d'air de diffusion d'air vers l'arrière peut se situer à proximité d'une entrée d'une première conduite de sortie, tout en étant distante d'une entrée d'une seconde conduite de sortie. Une augmentation du débit d'air dirigé vers l'arrière provoquera une variation plus importante de débit en sortie de la première conduite de sortie qu'en sortie de la seconde conduite de sortie. De même, si une prise d'air d'alimentation d'une conduite arrière est disposée sur une portion intermédiaire d'une conduite de sortie de diffusion d'air vers l'avant, la variation du débit de sortie de ladite conduite de sortie due à l'augmentation de débit d'air dirigé vers l'arrière sera différente de la variation de débit de sortie d'une conduite de sortie dépourvue de prise d'air. Une correction du débit souhaité dans chaque conduite de sortie permet d'obtenir en sortie de chaque conduite de sortie le débit initialement souhaité.

Dans un mode de mise en oeuvre, on détermine un débit corrigé d'entrée d'une conduite de sortie de diffusion d'air vers l'avant comme la somme d'un débit souhaité en sortie de ladite conduite de sortie et d'une correction de débit. La correction de débit est fonction du débit d'air dirigé vers l'arrière.

Dans un mode de mise en oeuvre, on détermine des débits corrigés d'entrée de conduites de sorties de diffusion d'air vers l'avant en fonction d'une répartition de débits souhaités en sortie desdites conduites de sorties. La correction de débit d'entrée des conduites de sortie, nécessaire pour obtenir les débits de sortie souhaités, est fonction de la répartition de débit entre les conduites de sortie. Par exemple, si des première et seconde conduites de sortie portent des prises d'air identiques d'alimentation d'une conduite arrière, et si un débit d'air plus important pénètre dans la seconde conduite de sortie, pour une augmentation de débit dirigé vers l'arrière, la correction de débit nécessaire en entrée de la seconde conduite de sortie sera plus importante que la correction de débit nécessaire en entrée de la première conduite de sortie.

Dans un mode de mise en oeuvre, on détermine une correction de débit comme le produit d'un débit d'air dirigé vers l'arrière et d'un coefficient de correction. La correction nécessaire de débit d'entrée d'une conduite de sortie de diffusion d'air vers l'avant est sensiblement proportionnelle à l'augmentation débit d'air dirigé vers l'arrière, ce qui permet d'utiliser une loi de variation linéaire d'une correction de débit, en fonction du débit d'air dirigé vers l'arrière.

Avantageusement, on détermine un coefficient de correction à partir d'une table prédéterminée. Une correction de débit d'entrée d'une conduite de sortie dépend de l'architecture d'un dispositif de climatisation, l'augmentation du débit d'air dirigé vers l'a arrière pouvant modifier de façon différente des débits de sortie de conduite de sortie de diffusion d'air vers l'avant. Il est judicieux de déterminer des coefficients de correction expérimentalement, pour un dispositif de climatisation donné. Dans les cas de plusieurs conduites de sortie de diffusion d'air vers l'avant, les coefficients de correction de débit dépendent d'une répartition d'air entre lesdites conduites de sortie. Comme une correction de débit est fonction sensiblement linéairement d'une augmentation de débit arrière, une table prédéterminée peut être établie pour chaque conduite de sortie à partir: d'un débit d'air admis, d'un débit d'air dirigé vers l'arrière de référence, et pour différentes répartitions de débit avant dans les conduites de sortie.

Dans un mode de mise en oeuvre, on commande un débit d'air admis et une répartition d'air entre des entrées de conduites de sortie de diffusion d'air. L'augmentation de débit d'air dirigé vers l'arrière doit être compensée par une augmentation de débit d'air admis, pour conserver un débit d'air diffusé vers l'avant. Le débit d'air admis peut être corrigé à l'aide d'un moyen de circulation d'air disposé dans un ensemble d'admission d'air. Selon une architecture d'un dispositif de climatisation, le débit de sortie de chaque conduite de sortie est modifié de façon différente par une augmentation de débit arrière, ce qui conduit à modifier la répartition d'air en entrée des conduites de sortie de diffusion d'air vers l'avant, à partir du débit d'air dirigé vers l'avant.

Dans un mode de mise en oeuvre, on détermine le débit d'air circulant dans une conduite arrière principale de diffusion d'air vers l'arrière en fonction d'une information de vitesse de rotation d'un actionneur rotatif d'un moyen de circulation d'air dans la conduite arrière principale.

La présente invention et ses avantages seront mieux compris à l'étude de la description détaillée de modes de réalisation pris à titre d'exemples nullement limitatifs et illustrés par les dessins annexés, sur lesquels :

- la figure 1 est une vue schématique d'un dispositif de climatisation selon l'invention ; et
- la figure 2 est un schéma bloc illustrant des étapes d'un procédé de climatisation d'un véhicule à partir du dispositif de climatisation de la figure 1.

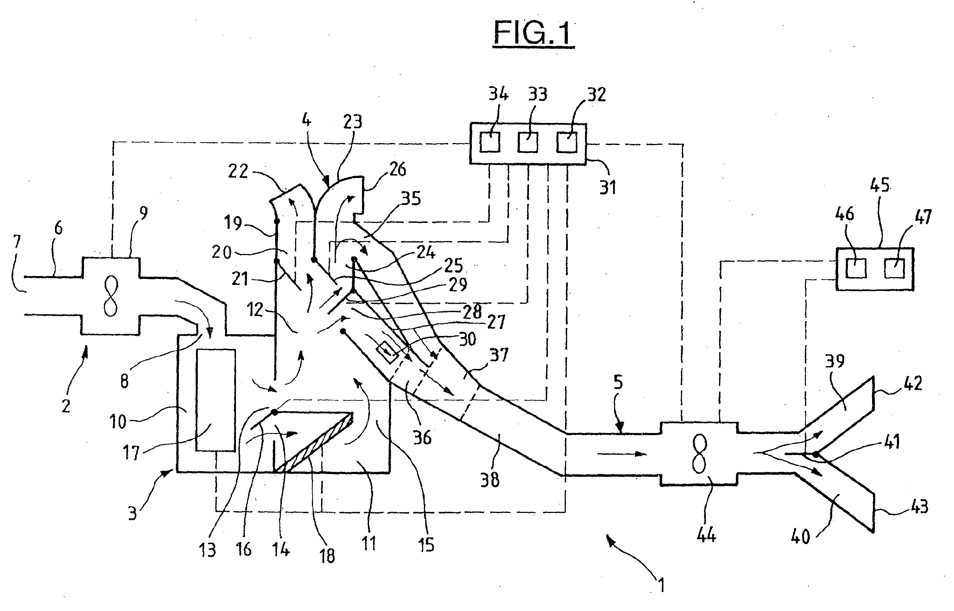

Sur la figure 1, un dispositif de climatisation 1 comprend des moyens d'admission d'air 2, un ensemble de chauffage/refroidissement de l'air 3, un ensemble d'aération avant 4 et un ensemble d'aération arrière 5.

Les moyens d'admission d'air 2 comprennent une conduite d'admission 6 pourvue d'une entrée 7 et d'une sortie 8, et un moyen de circulation d'air 9, sous la forme d'un ventilateur ou d'une pompe. L'ensemble de chauffage/refroidissement 3 comprend une chambre de refroidissement 10, une chambre de chauffage 11 et une chambre de mélange 12. Une ouverture 13 permet le passage d'air de la chambre de refroidissement 10 vers la chambre de mélange 12. Une ouverture 14 permet le passage d'air de la chambre de refroidissement 10 vers la chambre de chauffage 11. Les ouvertures 13 et 14 sont adjacentes. Une ouverture 15 distante des ouvertures 13 et 14 permet le passage d'air entre la chambre de chauffage 11 et la chambre de mélange 12. Un obturateur 16 permet d'obturer partiellement ou complètement les ouvertures 13 et 14.

L'air débouchant de la sortie 8 de la conduite d'admission 6 traverse un refroidisseur 17 disposé dans la chambre de refroidissement 10, du type évaporateur de boucle de climatisation à cycle de compression d'un gaz, de refroidissement du gaz par détente et d'échange de chaleur entre le gaz refroidi et l'air admis. En sortie du refroidisseur 17, l'air refroidi peut passer directement dans l'ouverture 13 vers la chambre de mélange 12. L'air sortant du refroidisseur 17 peut également passer dans la chambre de chauffage 11 par l'ouverture 14. Un radiateur de chauffage 18 est disposé en travers de la chambre de chauffage 11. L'air entrant par l'ouverture 14 traverse le radiateur 18 avant de ressortir par l'ouverture 15 vers la chambre de mélange 12. L'obturateur 16 permet une répartition de l'air refroidi en air refroidi passant directement dans la chambre de mélange 12 et d'air refroidi passant dans la chambre de chauffage 11 avant de passer vers la chambre de mélange 12, afin d'obtenir un mélange d'air à la température désirée. Le refroidisseur 17 peut être en fonctionnement ou arrêté, l'air dit « refroidi » étant dans ce cas sensiblement à la même température que l'air admis.

L'obturateur 16 peut comprendre un unique clapet orientable pour fermer complètement ou partiellement à la fois les ouvertures 13 et 14, avec une répartition différente d'air, suivant son orientation. On peut également prévoir que l'obturateur 16 comprend deux clapets indépendants de fermeture d'une part de l'ouverture 13 vers la chambre de mélange 12 et d'autre par de l'ouverture 14 vers la chambre de chauffage 1, ou un unique clapet pour fermer soit l'ouverture 13 soit l'ouverture 14.

Une conduite de sortie de dégivrage 19 possède une entrée 20 débouchant dans la chambre de mélange 12, et pouvant être fermée complètement ou partiellement par un clapet 21. Un aérateur 22 est disposé en sortie de la conduite de sortie 19, pour amener de l'air vers le pare-brise du véhicule. Une conduite de sortie de tableau de bord 23 possède une entrée 24 débouchant dans la chambre de mélange 12, et pouvant être fermée complètement ou partiellement par un clapet 25. Un aérateur 26 est disposé en sortie de la conduite de sortie de tableau de bord 23. Une conduite de sortie de pieds 27 comprend une entrée 28 débouchant dans la chambre de mélange 12 et pouvant être fermée complètement ou partiellement par un clapet 29. Une sortie 30 est disposée à une extrémité de la conduite de sortie inférieure 27.

Une unité de commande 31 comprend un module de traitement 32, des moyens mémoire 33, un programme stocké sur les moyens mémoire 33 et apte à être exécuté par un microprocesseur 34.

Le fonctionnement du dispositif de climatisation 1 qui serait dépourvu de l'ensemble d'aération arrière 5 est décrit ci-dessous. En fonction d'une température souhaitée, et de débits d'air souhaités en sortie des conduites de sortie de dégivrage 19, de tableau de bord 23 et de pieds 27, l'unité de commande 31 commande les moyens de circulation 9, le refroidisseur 17, le radiateur de chauffage 18, les moyens d'obturation 16, et les clapets 21, 25 et 29. l'unité de commande 31 détermine un débit total pour commander le moyen de circulation 9. En fonction de la température, l'unité de commande 31 commande le refroidisseur 17, le radiateur de chauffage 18 et l'obturateur 16, pour obtenir dans la chambre de mélange 12 l'air à la température souhaitée. l'unité de commande 31 détermine ensuite une répartition d'air souhaitée entre les conduites de sortie de dégivrage 19, de tableau de bord 23 et de pieds 27. Elle commande alors l'ouverture et la fermeture des clapets 21, 25 et 29 en vue d'une obturation complète ou partielle des entrées correspondantes 20, 24 et 28. La commande des clapets 21, 25, 29 peut être indépendante et réalisée à l'aide de plusieurs actionneurs, ou liée, et réalisée par un actionneur associé à un système de cames par exemple pour deux clapets 25, 29.

L'unité de commande 31 peut commander les organes automatiquement, en fonctions d'informations de capteurs et à partir d'un programme de pilotage, ou en mode manuel, dans lequel un utilisateur spécifié sur un panneau de réglage un débit de ventilation et une température d'air diffusé.

L'ensemble d'aération arrière 5 comprend une prise d'air 35 est disposée sur une portion intermédiaire de la conduite de sortie de tableau de bord 23. Une prise d'air 36 débouche dans la conduite de sortie de pieds 27 à proximité de la sortie 30. Les prises d'air 35, 36 se rejoignent dans un collecteur 37 débouchant par ailleurs dans une conduite arrière 38. Des sorties arrière 39, 40 sont reliées à l'extrémité de la conduite arrière 38 opposée au collecteur 37. Des moyens d'obturation 41 permettent une répartition d'air en provenance de la conduite arrière 38, vers les sorties arrière 39, 40. Les sorties arrière 39, 40 sont pourvues à leurs extrémités opposées à la conduite arrière 38 d'aérateurs 42, 43. Un moyen de circulation d'air rotatif 44 est disposé dans une portion intermédiaire de la conduite arrière 38. Une console de commande 45 comprend un bouton de réglage de débit 46 et un bouton de réglage de répartition 47, commandant respectivement le moyen de circulation d'air 44 et les moyens de répartition 41.

Un passager situé à l'arrière peut actionner les boutons de réglages 46, 47 afin de spécifier un débit d'air arrière et une répartition d'air entre les sorties arrières 39, 40, dont une peut se situer au niveau des pieds, et l'autre en hauteur par rapport au plancher du véhicule. Le passager arrière règle le débit d'air arrière indépendamment d'un réglage avant. En fonction du débit spécifié, la console de commande 45 provoque une rotation d'un actionneur rotatif du moyen de circulation 44, avec une vitesse de rotation adaptée.

Pour un réglage donné, l'adjonction de prises d'air 35, 36 sur les conduites de sortie de tableau de bord 23 et de pieds 27 provoque une variation de débit de sortie des conduites de sortie de tableau de bord 23 et de pieds 27 quand les aérateurs 42, 43 sont ouverts et que le moyen de circulation 44 fonctionne. Cette variation de débit est fonction de la répartition des débits entre les conduites de sortie de dégivrage 19, de tableau de bord 23, et de pieds 27. Cette variation de débit est également fonction du débit d'air dans la conduite arrière 38. Afin que l'adjonction de l'ensemble d'aération arrière 5 ne perturbe pas le fonctionnement de l'ensemble d'aération avant 4, l'unité de commande 31 détermine des débits corrigés qui sont utilisés pour la commande des moyens de circulation 9 et des clapets 21, 25, 29. Ces débits corrigés tiennent compte des variations de débit provoquées par l'ensemble d'aération arrière 5. La commande d'aération arrière peut alors être effectuée indépendamment de la commande d'aération avant, en ce qui concerne les débits, et sans perturber le fonctionnement de l'aération avant. l'unité de commande 31 tient compte d'une information de vitesse de rotation d'un actionneur rotatif des moyens de circulation 44 pour obtenir une information de débit dans la conduite arrière 38.

De façon plus détaillée, en fonction d'une température d'air diffusé souhaitée, et de débits d'air souhaités en sortie des conduites de sortie de dégivrage 19, de tableau de bord 23 et de pieds 27, l'unité de commande 31 commande les moyens de circulation 9, le refroidisseur 17, le radiateur de chauffage 18, les moyens d'obturation 16, et les clapets 21, 25 et 29. L'unité de commande 31 détermine un débit d'air total admis et commande le moyen de circulation 9 en vue d'une admission d'air suffisante. En fonction de la température souhaitée, l'unité de commande 31 commande le refroidisseur 17, le radiateur de chauffage 18 et l'obturateur 16, pour obtenir dans la chambre de mélange 12 l'air à la température souhaitée. L'unité de commande 31 détermine ensuite une répartition d'air souhaitée entre les conduites de sortie de dégivrage 19, de tableau de bord 23 et de pieds 27. Elle commande alors l'ouverture et la fermeture des clapets 21, 25 et 29 en vue d'une obturation complète ou partielle des entrées correspondantes 20, 24 et 28. La commande des clapets 21, 25, 29 peut être indépendante et réalisée à l'aide de plusieurs actionneurs, ou liée, et réalisée par un actionneur associé à un système de cames par exemple pour deux clapets 25, 29.

L'unité de commande 31 peut commander les organes automatiquement, en fonctions d'informations de capteurs et à partir d'un programme de pilotage, ou en mode manuel, dans lequel un utilisateur spécifie sur un panneau de réglage un débit de ventilation et une température d'air diffusé.

Si les conduites de sortie de tableau de bord 23 et de pieds 27 sont alimentées en air, de l'air sera dirigé vers l'arrière, en passant par les prises d'air 35, 37 et la conduite arrière 38. Un passager situé à l'arrière peut actionner les boutons de réglages 46, 47 afin d'augmenter un débit d'air arrière et une répartition d'air entre les sorties arrières 39, 40, dont une peut se situer au niveau des pieds, et l'autre en hauteur par rapport au plancher du véhicule. Le passager arrière règle le débit d'air arrière indépendamment d'un réglage avant. En fonction du débit arrière demandé, la console de commande 45 provoque une rotation d'un actionneur rotatif du moyen de circulation 44, avec une vitesse de rotation adaptée.

L'augmentation du débit d'air dans la conduite arrière 38 provoque une variation des débits de sortie des conduites de sortie 19, 23, 27. Ces variations de débit sont fonction, pour chaque conduite de sortie 19, 23, 27, de la répartition des débits entre les conduites de sortie 19, 23, 27. Ces variations de débit sont également fonction d'une augmentation de débit d'air dans la conduite arrière 38 provoquée par le moyen de circulation 44 disposé dans la conduite arrière 38.

La commande du débit arrière se fait indépendamment à partir de la console de commande arrière 45. Afin qu'une augmentation de débit dans la conduite arrière 38 ne modifie pas les débits en sorties des conduites de sortie 19, 23, 27, l'unité de commande 31 détermine des débits corrigés qui sont utilisés pour la commande des moyens de circulation 9 et des clapets 21, 25, 29. Ces débits corrigés tiennent compte des variations de débit provoquées par l'ensemble d'aération arrière 5. L'unité de commande 31 tient compte d'une information de vitesse de rotation d'un actionneur rotatif des moyens de circulation 44 pour déterminer un débit d'air diriger vers l'arrière. La commande d'aération arrière peut alors être effectuée indépendamment de la commande d'aération avant, en ce qui concerne les débits, et sans perturber le fonctionnement de l'aération avant.

Il existe une pluralité de répartitions de débit différentes. Comme les prises d'air 35, 37 sont disposées sur deux conduites de sortie 23, 27, dès qu'une des ces conduites de sortie 23, 27 est alimentée en air, la conduite arrière 38 est alimentée en air. La situation où les entrées des deux conduites de sorties de tableau de bord 23 et de pieds 27 sont complètement obturées correspond au cas où le pare-brise doit être dégivré rapidement, par exemple au démarrage du véhicule, après une nuit froide. Dans ce cas, l'alimentation de la conduite arrière 38 n'est en fait pas souhaitable puisque l'air chaud doit être envoyé vers le pare-brise pour un dégivrage rapide. La disposition des prises d'air 35, 37 sur les conduites de sortie 23, 27, et non sur la chambre de mélange 12 par exemple, permet d'éviter une diminution du débit d'air de dégivrage par une commande d'un débit arrière important, bien que celle-ci puisse être compensée par une commande approprié des organes du dispositif de climatisation 1. On pourrait bien entendu prévoir de disposer une prise d'air supplémentaire sur la conduite de sortie de dégivrage 19. Dans ce cas, la conduite arrière 38 pourrait être alimenté en air, quelle que soit la répartition d'air entre les conduites de sortie 19, 23, 27. Cependant, on pourrait bien entendu prévoir de disposer une prise d'air supplémentaire sur la conduite de sortie de dégivrage 19.

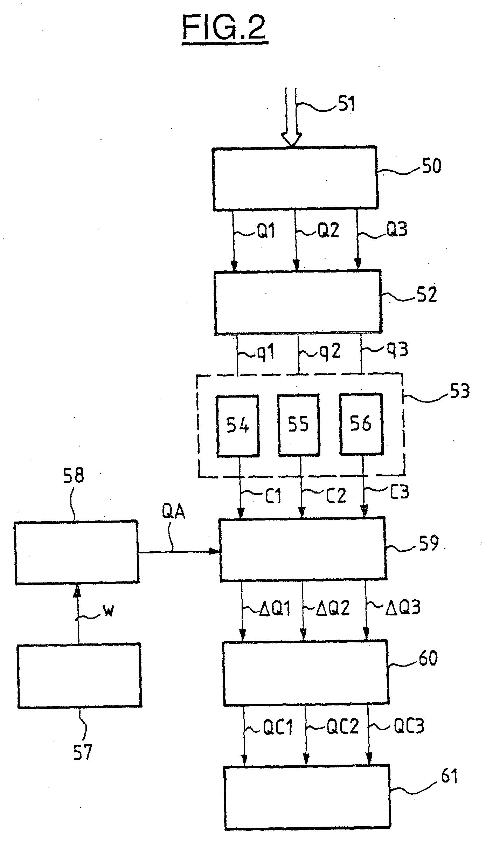

Sur la figure 2, un schéma bloc illustre un exemple d'étapes d'un procédé de climatisation selon l'invention, adapté au dispositif de climatisation de la figure 1, et pouvant être mis en oeuvre par l'unité de commande 31. Lors d'une étape de traitement 50, des données d'entrée symbolisées par une flèche 51 sont traitées par le module de traitement 32 de la figure 1 pour déterminer les débits Q1, Q2, Q3 souhaités en sortie des conduites de sortie de dégivrage 19, de tableau de bord 23 et de pieds 27. Cette détermination de débits souhaités Q1, Q2, Q3 est adaptée pour le dispositif de climatisation dépourvu d'ensemble d'aération arrière. Les données 51 comprennent, à titre d'exemple nullement limitatif, la température intérieure, l'ensoleillement, la température extérieure, etc. Ces données d'entrée peuvent être fournies par des capteurs adaptés disposés sur un véhicule.

Lors d'une étape 52, on détermine des coefficients de répartition q1, q2, q3 des débits souhaités Q1, Q2, Q3, définis par l'équation suivante :

$$qi = \frac{Qi}{(Q1+Q2+Q3)}$$

avec i = 1,2,3

Lors d'une étape 53, les coefficients de répartition de q1, q2, q3 débits souhaités Q1, Q2, Q3 sont utilisées comme entrées de tables prédéterminées, et schématisées par des blocs 54, 55, 56, correspondant respectivement aux conduites de sortie de dégivrage 19, de tableau de bord 23, et de pieds 27. En sortie, on récupère des coefficients de correction C1, C2, C3.

Lors d'étapes 57 et 58, pouvant être simultanées aux étapes 50, 52, 53, on récupère une information de vitesse de rotation ω d'un actionneur rotatif des moyens de circulation 44 (fig. 1), et on détermine à partir de cette information un débit d'air QA circulant dans la conduite arrière 38 (fig. 1). Le débit d'air arrière QA peut être déterminé à partir d'une table prédéterminée, dont l'entrée est la vitesse de rotation ω de l'actionneur rotatif. QA peut être une fonction linéaire ou affine de la vitesse de rotation ω.

Lors d'une étape 59, on détermine des corrections de débit ΔQ1, ΔQ2, ΔQ3 définie comme le produit d'un coefficient de correction C1, C2, C3, par le débit dans la conduite arrière QA. Lors d'une étape 60 suivante, on détermine des débits corrigés QC1, QC2, QC3, comme étant la somme d'un débit souhaité Q1, Q2, Q3, et de la correction de débit correspondante ΔQ1, ΔQ2, ΔQ3. Un débit corrigé est donc défini par l'équation suivante :

$$QCi = Qi + Qa(\omega)\cdot Ci(q1, q2, q3)$$

avec i = 1,2,3

Lorsque qu'une répartition de débits est spécifiée entre les conduites de sortie 19, 23, 27, les corrections de débit ΔQ1, ΔQ2, ΔQ3 varient linéairement en fonction du débit arrière. L'utilisation des corrections de débit ΔQ1, ΔQ2, ΔQ3 déterminées comme fonctions linéaires du débit arrière QA permet un calcul fiable et rapide des corrections de débit ΔQ1, ΔQ2, ΔQ3.

Les corrections de débit ΔQ1, ΔQ2, ΔQ3 de débit dépendent chacune de façon différente de la répartition de débit entre les conduites de sortie 19, 23, 27. Par exemple le débit d'air en sortie de la conduites de sortie de pieds 27 peut être important, le débit en sortie de la conduite de sortie de tableau de bord 23 étant faible. L'augmentation du débit d'air dans la conduite arrière 38 provoquera une variation de débit plus importante dans la conduite de sortie de pieds 27 que dans la conduite de sortie de tableau de bord 23. Les corrections de débit seront donc différentes. Les corrections de débit dans la conduite de sortie de dégivrage 19, où aucune prise d'air n'est disposée, sont généralement plus faibles que les corrections de débit dans les autres conduites de sortie 23, 27.

Les coefficients de correction C1, C2, C3 dépendent donc de la répartition des débits dans les conduites de sortie 19, 23, 27. Par ailleurs, les coefficients de correction C1, C2, C3 dépendent de l'architecture du dispositif de climatisation 1. Il est avantageux d'utiliser des tables 54, 55, 56 de coefficients de correction C1, C2, C3 déterminées expérimentalement.

Lors d'une étape 61, on commande le moyen de circulation 9 (fig. 1) en fonction de la somme des débits corrigés QC1, QC2, QC3, et les clapets 21, 25 et 29, en fonction des débits corrigés QC1, QC2, QC3, et plus particulièrement en fonction de coefficients de répartitions qc1, qc2, qc3 de débit corrigés QC1, QC2, QC3, définis par l'équation suivante :

$$qci = \frac{QCi}{(QC1+QC2+QC3)}$$

avec i = 1,2,3

Le moyen de circulation 9 permet de commander un débit d'entrée suffisant pour obtenir les débits souhaités Q1, Q2, Q3, QA en sortie des conduites de sortie de dégivrage 19, de tableau de bord 23, de pieds 27, et de la conduite arrière 38. Les clapets 21, 25, 29 permettent une répartition de débit entre les conduites de sortie de dégivrage 19, de tableau de bord 23, et de pieds 27, dans les entrées desquelles circulent les débits corrigés QC1, QC2, QC3. Les prises d'air 35, 37 prélèvent suffisamment d'air pour obtenir le débit d'air arrière QA souhaité. La variation de débit dans les conduites de sortie de dégivrage 19, de tableau de bord 23, de pieds 27 est telle que l'on obtient en sortie desdites conduites de sortie de dégivrage 19, de tableau de bord 23, de pieds 27 les débits souhaités en sortie Q1, Q2, Q3.

Lorsque le moyen de circulation 44 (fig. 1) fonctionne, lors de l'étape 61, on réalise la commande du moyen de circulation 9 (fig. 1) et des clapets 21, 25, 29 (fig. 1) de façon identique à la situation où le moyen de circulation 44 ne fonctionne pas, par exemple à l'aide de tables de commande prédéterminées. La compensation des variations de débit de sortie des conduites de sorties 19, 23, 27 (fig. 1), provoquées par une augmentation de débit d'air dirigé vers l'arrière, est obtenue par une commande lors de l'étape 61 non pas en fonction des débits souhaités Q1, Q2, Q3 en sortie des conduites de sorties 19, 23, 27, mais en fonction de débits corrigés QC1, QC2, QC3, déterminés à l'aide des tables 54, 55, 56 de coefficient de correction, fonction de la répartition de débits souhaités entre les conduites de sortie 19, 23, 27. En corrigeant des consignes d'entrée lorsque le moyen de circulation 44 fonctionne à l'aide de tables de coefficients de correction 54, 55, 56, on peut utiliser lors de l'étape 61 des tables de commande prédéterminées pour le dispositif lorsque le moyen de circulation 44 n'est pas en fonctionnement. Ceci permet d'utiliser des moyens mémoire moins importants.

Aucune prise d'air n'est disposée sur la conduite de sortie de dégivrage 19. Lorsque l'augmentation de débit arrière QA provoquée par le moyen de circulation 44 est non nulle, et que le coefficient de répartition de débit dans la conduite de sortie de dégivrage est faible, la variation de débit dans la conduite de sortie de dégivrage 19 est faible. Par ailleurs, l'augmentation du débit arrière QA entraîne la commande du moyen de circulation 9 (fig. 1) en vue d'une augmentation d'un débit d'air admis, pour que ce dernier soit égal à la somme des débits de sortie souhaités à l'avant Q1, Q2, Q3 et du débit arrière QA. En conséquence, l'augmentation du débit d'entrée, malgré la variation de débit dans la conduite de sortie de dégivrage, peut tendre à provoquer une augmentation du débit circulant dans la conduite de sortie de dégivrage 19. En d'autres termes, il existe des configurations de répartition de débit dans lesquelles la correction de débit de la conduite de dégivrage 19 peut être négative, c'est-à-dire que des coefficients de correction de débit peuvent être négatifs.

Le moyen de circulation 44 (fig. 1) permet une augmentation d'un débit d'air dirigé vers l'arrière par rapport à une situation où la conduite arrière 38 serait dépourvue de moyens de circulation. Le moyen de circulation 44 peut être commandé depuis les places arrière, à l'aide du bouton de réglage de débit 46 de la console de commande 45 (fig. 1). A partir d'une situation d'augmentation du débit d'air dirigé vers l'arrière importante, un passager peut commander une diminution de l'augmentation de débit d'air dirigé vers l'arrière. Le passager aura une sensation de diminution du débit d'air dirigé vers l'arrière.

Le dispositif de climatisation 1 de la figure 1 est décrit comme comprenant trois conduites de sortie, dont deux sont pourvues de prise d'air. Bien entendu, on peut prévoir plus de conduites de sortie, et un nombre de prises d'air différent. Le procédé de climatisation peut alors être facilement adapté. Le procédé de climatisation peut également être facilement adapté au cas d'un dispositif de climatisation comprenant des prises d'air disposées non sur les conduites de sortie, mais directement dans une chambre de mélange, ou une combinaison de prises d'air sur des conduites de sortie et dans une chambre de mélange.

Le dispositif de climatisation 1 peut être utilisé dans une configuration dans laquelle l'ensemble d'aération arrière 5 (fig. 1) est absent. Dans ce cas, la diffusion d'air se fait uniquement vers les places avant d'un véhicule automobile. Le procède de mise en oeuvre d'un tel dispositif de climatisation est identique au procède décrit ci-dessus, à ceci près que l'on passe directement de l'étape 52 à l'étape 61.

La modification du dispositif de climatisation à diffusion avant (moyens d'admission d'air 2, ensemble de chauffage/refroidissement 3 et ensemble d'aération avant 4 de la figure 1) se fait par adjonction d'un ensemble d'aération arrière 5 (fig. 1), avec des prises d'air disposés de façon à permettre un alimentation en air de l'ensemble d'aération arrière dans tous les cas, ou au moins dans tous les cas nécessaires. Des moyens de commande du dispositif à diffusion arrière, comme l'unité de commande 31, selon un aspect de l'invention, peuvent être adaptés facilement, par l'adjonction d'un nombre limité d'étapes de commande, pour permettre une commande de diffusion d'air Arrière, permettant notamment un réglage de débit arrière Indépendant d'un réglage de débit avant et d'un réglage de répartition d'air entre des conduites de sortie.

Grâce à l'invention, on obtient un procédé de climatisation permettant une diffusion d'air vers un espace arrière, sans perturbations d'une diffusion d'air avant, avec des réglages de débits avant et arrière indépendants.

## Revendications

1. Dispositif de climatisation comprenant une entrée d'air (6), un ensemble de traitement de chauffage/refroidissement (10, 11, 12) de l'air admis comprenant une chambre de mélange (12), au moins des première et seconde conduites de sortie (19, 23) de l'air traité débouchant dans la chambre de mélange (12), des moyens d'obturation d'entrée des conduites de sortie (21, 25) et un premier moyen de circulation d'air (9), **caractérisé par le fait qu'**il comprend une conduite arrière (38) alimentée en air à partir d'au moins une prise d'air (35) disposée sur au moins une conduite de sortie (27).

2. Dispositif selon la revendication 1, **caractérisé par le fait que** le dispositif de climatisation comprend un second moyen de circulation d'air (44) disposé dans une portion intermédiaire de la conduite arrière (38).

3. Dispositif selon l'une quelconque des revendications 1 ou 2, **caractérisé par le fait que** la conduite arrière (38) comprend à une extrémité opposée aux prises d'air (35, 37) au moins deux sorties arrière (39, 40).

4. Dispositif selon la revendication 3, **caractérisé par le fait qu'**il comprend un moyen de répartition (41) d'air entre les sorties arrière (39, 40), et un moyen de commande associé.

5. Dispositif selon l'une quelconque des revendications précédentes, **caractérisé par le fait qu'**il comprend au moins une troisième conduite de sortie (27), la conduite arrière (38) étant alimentée en air par des prises d'air (35, 37) disposées sur au moins deux conduites de sortie (27).

**6.** Dispositif selon l'une quelconque des revendications précédentes, **caractérisé par le fait que** chaque entrée de conduite de sortie (19, 23, 27) est associée à un moyen d'obturation (21, 25, 29).

**7.** Dispositif selon l'une quelconque des revendications précédentes, **caractérisé par le fait qu'**il comprend une unité de commande (31) apte à commander le premier moyen de circulation d'air (9) et les moyens d'obturations (21, 25, 29) des conduites de sortie (19, 23, 27) en fonction d'informations de débits souhaités (Q1, Q2, Q3) en sortie des conduites de sortie (19, 23, 27).

**8.** Dispositif selon la revendication 7, **caractérisé par le fait que** l'unité de commande (31) comprend des moyens de détermination d'une information de débit (Qa) dans la conduite arrière (38), et des moyens de détermination de débits corrigés (QC1, QC2, QC3) d'entrée des conduites de sortie, pour la commande des moyens d'obturation (21, 25, 29) des conduites de sortie et du premier moyen de circulation d'air (9).

**9.** Procédé de climatisation de l'habitacle d'un véhicule automobile présentant un dispositif de climatisation selon l'une quelconque des revendications précédentes, dans lequel, après traitement, une partie de l'air admis est dirigée vers l'avant et une autre partie de l'air admis est dirigée vers l'arrière, **caractérisé par le fait que** l'on augmente le débit d'air dirigé vers l'arrière pour effectuer la climatisation de la partie arrière du véhicule, et on corrige le débit d'air dirigé vers l'avant en fonction de l'augmentation de débit d'air vers l'arrière.

**10.** Procédé selon la revendication 9, **caractérisé par le fait que** l'on on augmente le débit d'air dirigé vers l'arrière à l'aide d'un moyen de circulation d'air (44) disposé dans une conduite arrière principale (38).

**11.** Procédé selon l'une quelconque des revendications 9 à 10, **caractérisé par le fait que** l'on alimente une conduite arrière principale (38) de diffusion d'air vers l'arrière du véhicule à partir d'au moins une prise d'air (35, 37) sur une conduite de sortie (23, 27) de diffusion d'air vers l'avant du véhicule.

**12.** Procédé selon l'une quelconque des revendications 9 à 11, **caractérisé par le fait que** l'on détermine des débits souhaités (Q1, Q2, Q3) en sortie de conduites de sortie (19, 23, 27) de diffusion d'air vers l'avant, on corrige les débits souhaités (Q1, Q2, Q3) en fonction d'une augmentation de débit d'air vers l'arrière.

**13.** Procédé selon l'une quelconque des revendications 9 à 12, **caractérisé par le fait que** l'on détermine un débit corrigé (QC1, QC2, QC3) d'entrée d'une conduite de sortie (19, 23, 27) de diffusion d'air vers l'avant comme la somme d'un débit souhaité (Q1, Q2, Q3) en sortie de ladite conduite de sortie (19, 23, 27) et d'une correction de débit (ΔQ1, ΔQ2, ΔQ3).

**14.** Procédé selon la revendication 13, **caractérisé par le fait que** l'on détermine des débits corrigés (QC1, QC2, QC3) d'entrée de conduites de sorties (19, 23, 27) de diffusion d'air vers l'avant en fonction d'une répartition (q1, q2, q3) de débits souhaités (Q1, Q2, Q3) en sortie desdites conduites de sorties (19, 23, 27).

**15.** Procédé selon l'une quelconque des revendications 9 à 14, **caractérisé par le fait que** l'on détermine une correction de débit (ΔQ1, ΔQ2, ΔQ3) comme le produit d'un débit d'air (Qa) dirigé vers l'arrière et d'un coefficient de correction (C1, C2, C3).

**16.** Procédé selon la revendication 15, **caractérisé par le fait que** l'on détermine un coefficient de correction (C1, C2, C3) à partir d'une table prédéterminée (54, 55, 56).

**17.** Procédé selon l'une quelconque des revendications 12 à 16, **caractérisé par le fait que** l'on commande un débit d'air admis et une répartition d'air entre des conduites de sortie (19, 23, 27) de diffusion d'air.

**18.** Procédé selon l'une quelconque des revendications précédentes, **caractérisé par le fait que** l'on détermine le débit d'air (Qa) circulant dans une conduite arrière principale (38) de diffusion d'air vers l'arrière en fonction d'une information de vitesse de rotation (ω) d'un actionneur rotatif d'un moyen de circulation d'air (44) dans la conduite arrière principale (38).

FIG.1

# FIG.2

# EP 1 323 555 A1

**Office européen des brevets**

## RAPPORT DE RECHERCHE EUROPEENNE

Numéro de la demande

EP 02 29 3195

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 4 665 971 A (SAKURAI YOSHIHIKO) 19 mai 1987 (1987-05-19) | 1-8 | B60H1/00 |
| Y | * colonne 6, ligne 52 – colonne 7, ligne 17; figures 5,9 * | 9-18 | |
| X | FR 2 710 878 A (VALEO THERMIQUE HABITACLE) 14 avril 1995 (1995-04-14) * page 6, ligne 30 – ligne 33 * | 1 | |
| Y | EP 1 106 405 A (FIAT AUTO SPA) 13 juin 2001 (2001-06-13) * colonne 2, ligne 46 – colonne 3, ligne 35; figure 5 * | 9-18 | |
| X | PATENT ABSTRACTS OF JAPAN vol. 013, no. 153 (M-813), 13 avril 1989 (1989-04-13) & JP 63 312218 A (NISSAN MOTOR CO LTD), 20 décembre 1988 (1988-12-20) * abrégé * | 9 | |
| A | DE 29 09 628 A (HAGENUK NEUFELDT KUHNKE GMBH) 25 septembre 1980 (1980-09-25) * revendication 1 * | 9 | **DOMAINES TECHNIQUES RECHERCHES (Int.Cl.7)** B60H |
| A | FR 2 661 759 A (SARI) 8 novembre 1991 (1991-11-08) * revendication 1 * | 18 | |
| A | EP 0 748 708 A (VALEO CLIMATISATION) 18 décembre 1996 (1996-12-18) | | |
| A | EP 0 756 955 A (FORD MOTOR CO) 5 février 1997 (1997-02-05) | | |
| A,D | EP 0 989 004 A (DELPHI TECH INC) 29 mars 2000 (2000-03-29) | | |

Le présent rapport a été établi pour toutes les revendications

| Lieu de la recherche | Date d'achèvement de la recherche | Examinateur |
|---|---|---|
| LA HAYE | 17 avril 2003 | Marangoni, G |

CATEGORIE DES DOCUMENTS CITES

X : particulièrement pertinent à lui seul
Y : particulièrement pertinent en combinaison avec un autre document de la même catégorie
A : arrière–plan technologique
O : divulgation non–écrite
P : document intercalaire

T : théorie ou principe à la base de l'invention
E : document de brevet antérieur, mais publié à la date de dépôt ou après cette date
D : cité dans la demande
L : cité pour d'autres raisons
............................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 02 29 3195

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

17-04-2003

| Document brevet cité au rapport de recherche | | Date de publication | Membre(s) de la famille de brevet(s) | | Date de publication |
|---|---|---|---|---|---|
| US 4665971 | A | 19-05-1987 | JP | 60259517 A | 21-12-1985 |
| | | | AU | 563776 B2 | 23-07-1987 |
| | | | AU | 4326585 A | 12-12-1985 |
| | | | KR | 8902121 B1 | 20-06-1989 |
| FR 2710878 | A | 14-04-1995 | FR | 2710878 A1 | 14-04-1995 |
| EP 1106405 | A | 13-06-2001 | IT | TO991069 A1 | 04-06-2001 |
| | | | EP | 1106405 A2 | 13-06-2001 |
| JP 63312218 | A | 20-12-1988 | AUCUN | | |
| DE 2909628 | A | 25-09-1980 | DE | 2909628 A1 | 25-09-1980 |
| | | | CH | 641412 A5 | 29-02-1984 |
| | | | NO | 794210 A ,B, | 15-09-1980 |
| | | | SE | 439904 B | 08-07-1985 |
| | | | SE | 8000596 A | 13-09-1980 |
| FR 2661759 | A | 08-11-1991 | FR | 2661759 A1 | 08-11-1991 |
| | | | AU | 7890591 A | 27-11-1991 |
| | | | WO | 9117491 A1 | 14-11-1991 |
| | | | PT | 97595 A | 31-08-1993 |
| | | | TR | 25345 A | 01-03-1993 |
| EP 0748708 | A | 18-12-1996 | FR | 2735425 A1 | 20-12-1996 |
| | | | DE | 69612910 D1 | 28-06-2001 |
| | | | DE | 69612910 T2 | 28-03-2002 |
| | | | EP | 0748708 A1 | 18-12-1996 |
| | | | ES | 2158193 T3 | 01-09-2001 |
| EP 0756955 | A | 05-02-1997 | US | 5673964 A | 07-10-1997 |
| | | | EP | 0756955 A2 | 05-02-1997 |
| EP 0989004 | A | 29-03-2000 | US | 6045444 A | 04-04-2000 |
| | | | EP | 0989004 A2 | 29-03-2000 |

EPO FORM P0460

Pour tout renseignement concernant cette annexe : voir Journal Officiel de l'Office européen des brevets, No.12/82